# EUROPEAN PATENT APPLICATION

(11) **EP 4 589 894 A1**
(43) Date of publication of application: **23.07.2025**
(21) Application number: 22958519.5
(22) Date of filing: 16.09.2022
(51) Int. Cl.: H04L 27/00

(54) **WIRELESS COMMUNICATION METHOD AND APPARATUS FOR PROXIMITY SERVICES (PROSE), AND COMMUNICATION DEVICE AND STORAGE MEDIUM**

(71) Applicant: Beijing Xiaomi Mobile Software Co., Ltd., Beijing 100085 (CN)
(72) Inventor: SHEN, Yang, Beijing 100085 (CN); LU, Wei, Beijing 100085 (CN)
(74) Representative: Dehns Germany Partnerschaft mbB
(86) International application number: PCT/CN2022/119476
(87) International publication number: WO 2024/055329

(57) **Abstract**

Embodiments of the present disclosure provide a wireless communication method for proximity services (ProSe). The method is executed by a first network function and comprises: determining, on the basis of a determination result for ProSe terminal-to-network relay capability information, whether to send, in a ProSe service authorization and parameter configuration process, ProSe terminal-to-network relay control plane security indication information. The ProSe terminal-to-network relay control plane security indication information is used for indicating: executing a ProSe terminal-to-network relay security mechanism based on the control plane (CP). The capability information comprises at least one of: terminal capability information, which indicates that the terminal supports or does not support the ProSe terminal-to-network relay control plane security mechanism; and network capability information, which indicates that the network supports or does not support the ProSe terminal-to-network relay control plane security mechanism.

## Description

### TECHNICAL FIELD

The present disclosure relates to, but is not limited to, the field of wireless communication technologies, and in particular to a wireless communication method and apparatus for a Proximity Service (ProSe), a communication device and a storage medium.

### BACKGROUND

The security mechanism of Proximity Service (ProSe) UE to network relay (UE-to-Network Relay) includes two options: a Control Plane (CP) based solution and a User Plane (UP) based solution. In the related arts, when ProSe communication is performed, how to select and apply the CP based solution and/or the UP based solution is an issue that needs to be considered.

### SUMMARY

Embodiments of the present disclosure disclose a wireless communication method and apparatus for a Proximity Service (ProSe), a communication device and a storage medium.

According to a first aspect of embodiments of the present disclosure, there is provided a wireless communication method for a Proximity Service (ProSe), which is performed by a first network function and includes:
determining capability information associated with a ProSe UE-to-Network Relay; and
determining, based on a determination result of the capability information, whether to send control plane security indication information for the ProSe UE-to-Network Relay to a terminal during a ProSe service authorization procedure and parameter provisioning procedure;
wherein the control plane security indication information for the ProSe UE-to-Network Relay is configured to indicate execution of a Control Plane (CP) based ProSe UE-to-Network Relay security mechanism, and the capability information includes at least one of:
terminal capability information, indicating whether the control plane security mechanism for the ProSe UE-to-Network Relay is supported or not supported by the terminal; or
network capability information, indicating whether the control plane security mechanism for the ProSe UE-to-Network Relay is supported or not supported by a network.

In an embodiment, the first network function is a Policy Control Function (PCF).

In an embodiment, determining, based on the determination result of the capability information, whether to send the control plane security indication information for the ProSe UE-to-Network Relay to the terminal during the ProSe service authorization procedure and parameter provisioning procedure includes:
in response to the control plane security mechanism for the ProSe UE-to-Network Relay being supported by the terminal and the control plane security mechanism for the ProSe UE-to-Network Relay being supported by the network, determining to send the control plane security indication information for the ProSe UE-to-Network Relay to the terminal during the ProSe service authorization procedure and parameter provisioning procedure;
   or,
in response to the control plane security mechanism for the ProSe UE-to-Network Relay being not supported by the terminal and/or the control plane security mechanism for the ProSe UE-to-Network Relay being not supported by the network, determining not to send the control plane security indication information for the ProSe UE-to-Network Relay to the terminal during the ProSe service authorization procedure and parameter provisioning procedure.

In an embodiment, sending the control plane security indication information for the ProSe UE-to-Network Relay to the terminal during the ProSe service authorization procedure and parameter provisioning procedure includes:
sending a service authorization parameter and/or policy and parameter provisioning parameter and/or policy including the control plane security indication information for the ProSe UE-to-Network Relay to the terminal during the ProSe service authorization procedure and parameter provisioning procedure.

In an embodiment, the method further includes:
receiving the terminal capability information sent by a second network function.

In an embodiment, the second network function is an Access and Mobility Management Function (AMF).

In an embodiment, registration request information of the terminal received by the AMF includes the terminal capability information.

In an embodiment, the method further includes:
receiving the terminal capability information sent by the terminal.

In an embodiment, receiving the terminal capability information sent by the terminal includes:
receiving, during a UE policy association establishment procedure and/or UE triggered policy provisioning procedure, the terminal capability information sent by the terminal.

In an embodiment, the terminal capability information is carried by a UE policy association establishment and/or UE triggered policy provisioning request.

According to a second aspect of embodiments of the present disclosure, there is provided a wireless communication method for a Proximity Service (ProSe), which is performed by a terminal and includes:
receiving, during a ProSe service authorization procedure and parameter provisioning procedure, control plane security indication information for a ProSe UE-to-Network Relay sent by a first network function;
wherein the control plane security indication information for the ProSe UE-to-Network Relay is configured to indicate execution of a Control Plane (CP) based ProSe UE-to-Network Relay security mechanism.

In an embodiment, the first network function is a PCF.

In an embodiment, receiving, during the ProSe service authorization procedure and parameter provisioning procedure, the control plane security indication information for the ProSe UE-to-Network Relay sent by the first network function includes:
receiving, during the ProSe service authorization procedure and parameter provisioning procedure, a service authorization parameter and/or policy and parameter provisioning parameter and/or policy, including the control plane security indication information for the ProSe UE-to-Network Relay, sent by the first network function.

In an embodiment, the method further includes:
sending terminal capability information to the first network function, wherein the terminal capability information indicates whether the control plane security mechanism for the ProSe UE-to-Network Relay is supported or not supported by a terminal.

In an embodiment, sending the terminal capability information to the first network function includes:
sending the terminal capability information to the first network function during a UE policy association establishment procedure and/or UE triggered policy provisioning procedure.

In an embodiment, the terminal capability information is carried by a UE policy association establishment and/or UE triggered policy provisioning request.

In an embodiment, the method further includes:
sending registration request information, wherein the registration request information indicates the terminal capability information, and the terminal capability information indicates whether the control plane security mechanism for the ProSe UE-to-Network Relay is supported or not supported by the terminal.

According to a third aspect of embodiments of the present disclosure, there is provided a wireless communication method for a Proximity Service (ProSe), which is performed by a second network function and includes:
determining, based on ProSe capability information and ProSe service authorization information, whether a terminal is authorized to use a ProSe service; and
in response to the terminal being authorized, sending the ProSe capability information to a first network function, wherein the ProSe capability information includes terminal capability information, and the terminal capability information indicates whether a control plane security mechanism for a ProSe UE-to-Network Relay is supported or not supported by the terminal.

In an embodiment, the second network function is an Access and Mobility Management Function (AMF).

According to a fourth aspect of embodiments of the present disclosure, there is provided a wireless communication apparatus for a Proximity Service (ProSe), including:
a determination module, configured to determine capability information associated with a ProSe UE-to-Network Relay, and determine, based on a determination result of the capability information, whether to send control plane security indication information for the ProSe UE-to-Network Relay to a terminal during a ProSe service authorization procedure and parameter provisioning procedure;
wherein the control plane security indication information for the ProSe UE-to-Network Relay is configured to indicate execution of a Control Plane (CP) based ProSe UE-to-Network Relay security mechanism, and the capability information includes at least one of:
terminal capability information, indicating whether a control plane security mechanism for the ProSe UE-to-Network Relay is supported or not supported by the terminal; or
network capability information, indicating whether the control plane security mechanism for the ProSe UE-to-Network Relay is supported or not supported by a network.

According to a fifth aspect of embodiments of the present disclosure, there is provided a wireless communication apparatus for a Proximity Service (ProSe), including:
a receiving module, configured to receive, during a ProSe service authorization procedure and parameter provisioning procedure, control plane security indication information for a ProSe UE-to-Network Relay sent by a first network function;
wherein the control plane security indication information for the ProSe UE-to-Network Relay is configured to indicate execution of a Control Plane (CP) based ProSe UE-to-Network Relay security mechanism.

According to a sixth aspect of embodiments of the present disclosure, there is provided a wireless communication apparatus for a Proximity Service (ProSe), including:
a determination module, configured to determine, based on ProSe capability information and ProSe service authorization information, whether a terminal is authorized to use a ProSe service; and
a sending module, configured to, in response to the terminal being authorized, send the ProSe capability information to a first network function, wherein the ProSe capability information includes terminal capability information, and the terminal capability information indicates whether a control plane security mechanism for a ProSe UE-to-Network Relay is supported or not supported by the terminal.

According to a seventh aspect of embodiments of the present disclosure, there is provided a wireless communication system for a Proximity Service (ProSe), including a first network function and a second network function, wherein the first network function is configured to execute the method described in any first network function of the present disclosure, and the second network function is configured to execute the method described in any second network function of the present disclosure.

According to an eighth aspect of embodiments of the present disclosure, there is provided a communication device, including:
a processor; and
a memory configured to store executable instructions of the processor;
wherein the processor is configured to implement the method in any embodiment of the present disclosure when running the executable instructions.

According to a ninth aspect of embodiments of the present disclosure, there is provided a computer storage medium having a computer executable program stored thereon, which, when executed by a processor, implements the method in any embodiment of the present disclosure.

In the embodiments of the present disclosure, the terminal capability information sent by the terminal is received, and the terminal capability information indicates whether the terminal supports or does not support the control plane security mechanism for the ProSe UE-to-Network Relay. The capability information associated with the ProSe UE-to-Network Relay is determined, and based on the determination result of the capability information, it is determined whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay.

### BRIEF DESCRIPTION OF THE DRAWINGS

FIG. 1 shows a schematic structural diagram of a wireless communication system according to an embodiment of the present disclosure.
FIG. 2 shows a schematic flowchart of a wireless communication method for a Proximity Service (ProSe) according to an embodiment of the present disclosure.
FIG. 3 shows a schematic flowchart of a wireless communication method for a Proximity Service (ProSe) according to an embodiment of the present disclosure.
FIG. 4 shows a schematic flowchart of a wireless communication method for a Proximity Service (ProSe) according to an embodiment of the present disclosure.
FIG. 5 shows a schematic flowchart of a wireless communication method for a Proximity Service (ProSe) according to an embodiment of the present disclosure.
FIG. 6 shows a schematic flowchart of a wireless communication method for a Proximity Service (ProSe) according to an embodiment of the present disclosure.
FIG. 7 shows a schematic flowchart of a wireless communication method for a Proximity Service (ProSe) according to an embodiment of the present disclosure.
FIG. 8 shows a schematic flowchart of a wireless communication method for a Proximity Service (ProSe) according to an embodiment of the present disclosure.
FIG. 9 shows a schematic diagram of a wireless communication apparatus for a Proximity Service (ProSe) according to an embodiment of the present disclosure.
FIG. 10 shows a schematic diagram of a wireless communication apparatus for a Proximity Service (ProSe) according to an embodiment of the present disclosure.
FIG. 11 shows a schematic diagram of a wireless communication apparatus for a Proximity Service (ProSe) according to an embodiment of the present disclosure.
FIG. 12 shows a schematic diagram of a wireless communication system for a Proximity Service (ProSe) according to an embodiment of the present disclosure.
FIG. 13 shows a schematic structural diagram of a terminal according to an embodiment of the present disclosure.
FIG. 14 shows a block diagram of a base station according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the present disclosure. Instead, they are merely examples of apparatuses and methods consistent with some aspects of the embodiments of the present disclosure as recited in the appended claims.

The terms used in the embodiments of the present disclosure are merely for the purpose of describing particular embodiments and are not intended to limit the embodiments of the present disclosure. As used in the present disclosure and the appended claims, the singular forms "a" and "the" are intended to include the plural forms as well, unless the context clearly indicates otherwise. It should also be understood that the term "and/or" as used herein refers to and includes any or all possible combinations of one or more of the associated listed items.

It should be understood that, although the terms first, second, third, etc. may be used in embodiments of the present disclosure to describe various information, such information should not be limited to these terms. These terms are only used to distinguish the same type of information from each other. For example, without departing from the scope of embodiments of the present disclosure, first information may also be referred to as second information, and similarly, the second information may also be referred to as the first information. Depending on the context, the word "if" as used herein can be interpreted as "upon" or "when" or "in response to determination".

For the purpose of brevity and ease of understanding, the term "greater than" or "less than" is used herein to characterize size relationships. However, those skilled in the art can understand that the term "greater than" also covers the meaning of "greater than or equal to", and "less than" also covers the meaning of "less than or equal to".

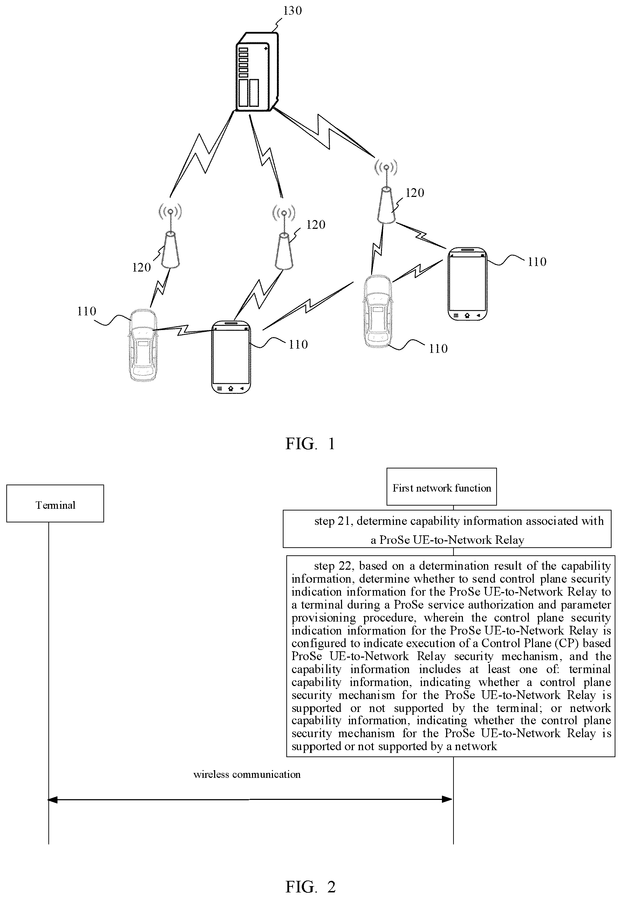

Reference is made to FIG. 1, which shows a schematic structural diagram of a wireless communication system provided by an embodiment of the present disclosure. As illustrated in FIG. 1, the wireless communication system is a communication system based on mobile communication technologies. The wireless communication system may include several User Equipments (UEs) 110 and several base stations 120.

The UE 110 may refer to a device that provides voice and/or data connectivity to a user. The UE 110 may communicate with one or more core networks via a Radio Access Network (RAN). The UE 110 may be an Internet of Things UE, such as a sensor device, a mobile phone and a computer with the Internet of Things UE, for example, may be a fixed, portable, pocket-sized, handheld, built-in computer or vehicle-mounted device. For example, the UE may be a station (STA), a subscriber unit, a subscriber station, a mobile station, a mobile, a remote station, an access point, a remote terminal, an access terminal, a user terminal, a user agent, a user device, or user equipment. Or, the UE 110 may also be a device of an unmanned aerial vehicle. Or, the UE 110 may also be a vehicle-mounted device, such as a trip computer with a wireless communication function, or a wireless user device connected to an external trip computer. Or, the UE 110 may also be a roadside device, such as a streetlight, a signal light or another roadside device with a wireless communication function.

The base station 120 can be a network-side device in a wireless communication system. The wireless communication system can be a 4th generation mobile communication (4G) system, also known as a Long Term Evolution (LTE) system. Or, the wireless communication system may also be a 5G system, also known as a New Radio (NR) system or a 5G NR system. Or, the wireless communication system may also be a next-generation system of 5G system. An access network in the 5G system can be referred to as a New Generation-Radio Access Network (NG-RAN).

The base station 120 can be an evolved NodeB (eNB) in the 4G system. Or, the base station 120 may also be a gNB with a central distributed architecture in the 5G system. When the base station 120 adopts the central distributed architecture, it usually includes a Central Unit (CU) and at least two Distributed Units (DUs). The CU is provided with a protocol stack of a Packet Data Convergence Protocol (PDCP) layer, a Radio Link Control (RLC) layer, and a Media Access Control (MAC) layer. The DU is provided with a protocol stack of a Physical (PHY) layer. A specific implementation of the base station 120 is not limited in embodiments of the present disclosure.

A wireless connection can be established between the base station 120 and the UE 110 through a radio air interface. In different implementations, the radio air interface is a radio air interface based on a 4th generation mobile communication network technology (4G) standard. Or, the radio air interface is a radio air interface based on a 5th generation mobile communication network technology (5G) standard, such as the NR. Or, the radio air interface may also be a radio air interface based on a 5G next-generation mobile communication network technology standard.

In some embodiments, an End to End (E2E) connection may also be established between UEs 110, such as a vehicle to vehicle (V2V) communication, a vehicle to infrastructure (V2I) communication and a vehicle to pedestrian (V2P) communication in a vehicle to everything (V2X) communication, and other scenarios.

Here, the above UE may also be considered to be a terminal device in the following embodiments.

In some embodiments, the above wireless communication system may further include a network management device 130.

The several base stations 120 are connected to the network management device 130, respectively. The network management device 130 can be a core network device in the wireless communication system. For example, the network management device 130 can be a Mobility Management Entity (MME) in an Evolved Packet Core (EPC) network. Or, the network management device may also be another core network device, such as a Serving Gateway (SGW), a Public Data Network Gateway (PGW), a Policy and Charging Rules Function (PCRF) unit or a Home Subscriber Server (HSS). An implementation form of the network management device 130 is not limited in embodiments of the present disclosure.

In order to facilitate the understanding of those skilled in the art, embodiments of the present disclosure enumerate multiple implementations to clearly illustrate the technical solutions of the embodiments of the present disclosure. Note that, those skilled in the art can understand that the multiple embodiments provided by the embodiments of the present disclosure can be executed separately, or can be executed together with the methods of other embodiments of the embodiments of the present disclosure, or can be executed together with some methods in other related arts separately or in combination; the embodiments of the present disclosure do not limit this.

In order to better understand the technical solution described in any embodiment of the present disclosure, an application scenario in the related art is explained first.

In an embodiment, the 5G ProSe UE-to-Network Relay is a 5G ProSe-enabled UE that provides functionality to support connectivity to the network for 5G ProSe Remote UE(s).

In an embodiment, the 5G ProSe Remote UE is a 5G ProSe-enabled UE that communicates with a Data Network (DN) via the 5G ProSe UE-to-Network Relay.

In an embodiment, the security mechnism of the 5G ProSe UE-to-Network Relay includes a CP based solution and a UP based solution.

In an embodiment, a Control Plane Security Indicator is introduced associated to a Remote Service Control (RSC) to indicate whether the CP based solution or the UP based solution is applied for the 5G ProSe UE-to-Network Relay security mechanism. Here, the Control Plane Security Indicator is a parameter of the ProSe Policy (ProSeP), which is used to indicate the UE policy.

In an embodiment, the 5G core network (5GC) should be able to provide policy information to the UE from a Policy Control Function (PCF). Such UE policy information includes:
1. Access Network Discovery and Selection Policy (ANDSP): it is used by the UE for selecting the non-3GPP access network.
2. UE Route Selection Policy (URSP): this policy is used by the UE to determine how to route outgoing traffic. Traffic can be routed to an established Packet Data Unit (PDU) Session, can be offloaded to non-3GPP access outside a PDU Session, can be routed via a ProSe Layer-3 UE-to-Network Relay outside a PDU session, or can trigger the establishment of a new PDU Session.
3. V2X Policy (V2XP): this policy provides configuration parameters to the UE for V2X communication over the PC5 reference point or over the Uu reference point or both.
4. ProSe Policy (ProSeP): this policy provides configuration parameters to the UE for ProSe Direct Discovery, ProSe Direct Communication, ProSe UE-to-Network Relay and Remote UE.

In an embodiment, if the Control Plane Security Indicator is provided to the UE for a particular RSC, it indicates that the security procedure is performed over the control plane. If the Control Plane Security Indicator is not provided, the security procedure is performed over the user plane. The PCF includes the Control Plane Security Indicator into the UE policy container if the CP based solution is supported and delivers it to the UE during UE policy association establishment or UE triggered policy provisioning procedure (UE policy association update procedure).

In an embodiment, the PCF determines contents of the ProSeP based on the information contained in the 5G ProSe Policy and Parameter Provisioning Request. The UE may also include UE capabilities in the 5G ProSe Policy Provisioning Request and the PCF may determine the ProSe Policy/Parameters for the UE based on the received UE capabilities.

In an embodiment, if the UE supports one of 5G ProSe capabilities and it does not have valid 5G ProSe policy/parameters, the UE includes the UE Policy Container with indicating the 5G ProSe Policy Provisioning Request during the registration procedure. The UE may also include UE capabilities in the 5G ProSe Policy Provisioning Request and the PCF may determine the ProSe Policy/Parameters for the UE based on the received UE capabilities.

In an embodiment, the Registration procedure for UE is performed with the following additions:
- the UE includes the 5G ProSe Capability as part of the "5GMM capability" in the Registration Request message. The AMF stores the 5G ProSe Capability for the 5G ProSe operation.
- the 5G ProSe Capability indicates whether the UE supports one or more of the following ProSe capabilities:
- 5G ProSe Direct Discovery;
- 5G ProSe Direct Communication;
- 5G ProSe Layer-2 UE-to-Network Relay;
- 5G ProSe Layer-3 UE-to-Network Relay;
- 5G ProSe Layer-2 Remote UE; or
- 5G ProSe Layer-3 Remote UE.

This will cause a problem: the PCF includes a Control Plane Security Indicator into the UE policy container if the CP based solution is supported by the network without any knowledge on the UE capability on the support of the CP based solution. If the CP based 5G ProSe UE-to-Network Relay security mechanism is not supported by the UE (either the 5G ProSe U2N relay UE or the 5G ProSe U2N remote UE), then it can't be applied.

As shown in FIG. 2, an embodiment of the present disclosure provides a wireless communication method for a Proximity Service (ProSe), which is performed by a first network function and includes:
in step 21, capability information associated with a ProSe UE-to-Network Relay is determined; and
in step 22, based on a determination result of the capability information, it is determined whether to send control plane security indication information for the ProSe UE-to-Network Relay to a terminal during a ProSe service authorization procedure and parameter provisioning procedure.

The control plane security indication information for the ProSe UE-to-Network Relay is configured to indicate execution of a Control Plane (CP) based ProSe UE-to-Network Relay security mechanism, and the capability information includes at least one of:
terminal capability information, indicating whether a control plane security mechanism for the ProSe UE-to-Network Relay is supported or not supported by the terminal; or
network capability information, indicating whether the control plane security mechanism for the ProSe UE-to-Network Relay is supported or not supported by a network.

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of a New Radio (NR) terminal (e.g., an R17 NR terminal).

The access network device involved in the present disclosure may be a base station, and the base station may be various types of base stations, for example, a base station of the third generation mobile communication (3G) network, a base station of the fourth generation mobile communication (4G) network, a base station of the fifth generation mobile communication (5G) network, or other evolved base stations.

The network functions involved in the present disclosure may be various types of network functions, for example, a network function of the fifth generation mobile communication (5G) network or other evolved network functions. For example, the first network function is a PCF, and the second network function is an Access and Mobility Management Function (AMF).

Here, the ProSe service authorization procedure and parameter provisioning procedure (Authorization and Provisioning for ProSe service) is a procedure associated with executing the ProSe service.

In an embodiment, the capability information associated with the ProSe UE-to-Network Relay is determined, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. Based on the determination result of the capability information, it is determined whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism.

In an embodiment, the capability information associated with the ProSe UE-to-Network Relay is determined, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. In response to the terminal supporting the control plane security mechanism for the ProSe UE-to-Network Relay and the network supporting the control plane security mechanism for the ProSe UE-to-Network Relay, it is determined to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism.

In an embodiment, the capability information associated with the ProSe UE-to-Network Relay is determined, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. In response to the terminal not supporting the control plane security mechanism for the ProSe UE-to-Network Relay and/or the network not supporting the control plane security mechanism for the ProSe UE-to-Network Relay, it is determined not to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism.

In an embodiment, the capability information associated with the ProSe UE-to-Network Relay is determined, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. In response to the terminal supporting the control plane security mechanism for the ProSe UE-to-Network Relay and the network supporting the control plane security mechanism for the ProSe UE-to-Network Relay, it is determined to send a service authorization parameter and/or policy and parameter provisioning parameter and/or policy including the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism.

In an embodiment, the terminal capability information sent by a second network function is received, and the terminal capability information indicates whether the terminal supports or does not support the control plane security mechanism for the ProSe UE-to-Network Relay. The capability information associated with the ProSe UE-to-Network Relay is determined, and based on the determination result of the capability information, it is determined whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay.

In an embodiment, the second network function is an Access and Mobility Management Function (AMF). Registration request information of the terminal received by the AMF includes the capability information.

In an embodiment, the terminal capability information sent by the terminal is received, and the terminal capability information indicates whether the terminal supports or does not support the control plane security mechanism for the ProSe UE-to-Network Relay. The capability information associated with the ProSe UE-to-Network Relay is determined, and based on the determination result of the capability information, it is determined whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay.

In an embodiment, during a UE policy association establishment procedure and/or UE triggered policy provisioning procedure, the terminal capability information sent by the terminal is received, and the terminal capability information indicates whether the terminal supports or does not support the control plane security mechanism for the ProSe UE-to-Network Relay. The capability information associated with the ProSe UE-to-Network Relay is determined, and based on the determination result of the capability information, it is determined whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. For example, a UE policy association establishment and/or UE triggered policy provisioning request carries the terminal capability information.

In embodiments of the present disclosure, the capability information associated with the ProSe UE-to-Network Relay is determined, and based on the determination result of the capability information, it is determined whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. Here, since whether to send the the control plane security indication information for the ProSe UE-to-Network Relay to the terminal during the ProSe service authorization procedure and parameter provisioning procedure is determined according to the determination result of the terminal capability information and the network capability information for the ProSe UE-to-Network Relay, compared with not sending the control plane security indication information for the ProSe UE-to-Network Relay, whether to send the control plane security indication information for the ProSe UE-to-Network Relay can be adapted to the determination result, thereby improving the ProSe wireless communication mechanism and making the ProSe wireless communication more reliable.

It should be noted that those skilled in the art can understand that the method provided in embodiments of the present disclosure can be executed alone or together with some methods in the embodiments of the present disclosure or some methods in the related arts.

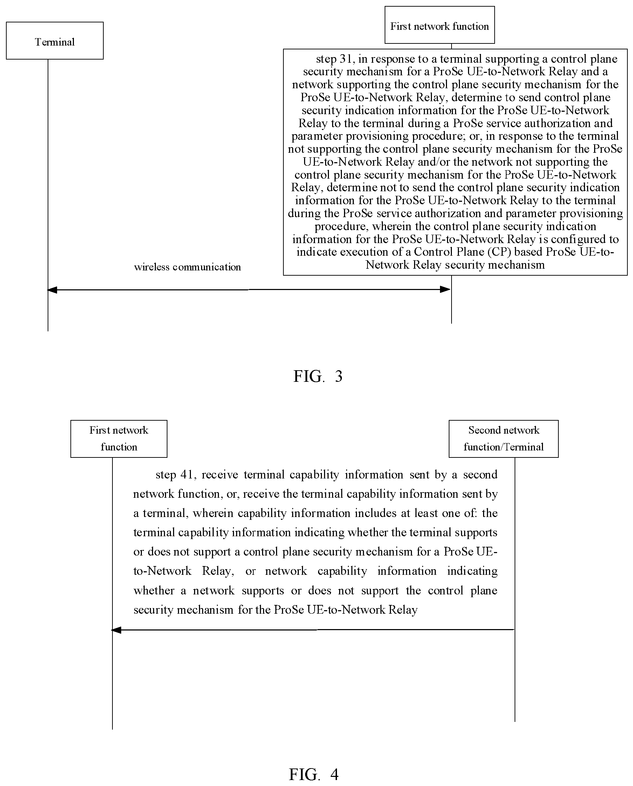

As shown in FIG. 3, an embodiment of the present disclosure provides a wireless communication method for a Proximity Service (ProSe), which is performed by a first network function and includes:
in step 31, in response to a terminal supporting a control plane security mechanism for a ProSe UE-to-Network Relay and a network supporting the control plane security mechanism for the ProSe UE-to-Network Relay, it is determined to send control plane security indication information for the ProSe UE-to-Network Relay to the terminal during a ProSe service authorization procedure and parameter provisioning procedure;
   or,
in response to the terminal not supporting the control plane security mechanism for the ProSe UE-to-Network Relay and/or the network not supporting the control plane security mechanism for the ProSe UE-to-Network Relay, it is determined not to send the control plane security indication information for the ProSe UE-to-Network Relay to the terminal during the ProSe service authorization procedure and parameter provisioning procedure; and
the control plane security indication information for the ProSe UE-to-Network Relay is configured to indicate execution of a Control Plane (CP) based ProSe UE-to-Network Relay security mechanism.

In an embodiment, the capability information associated with the ProSe UE-to-Network Relay is determined, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. In response to the terminal supporting the control plane security mechanism for the ProSe UE-to-Network Relay and the network supporting the control plane security mechanism for the ProSe UE-to-Network Relay, it is determined to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism.

In an embodiment, the capability information associated with the ProSe UE-to-Network Relay is determined, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. In response to the terminal not supporting the control plane security mechanism for the ProSe UE-to-Network Relay and/or the network not supporting the control plane security mechanism for the ProSe UE-to-Network Relay, it is determined not to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism.

In an embodiment, the capability information associated with the ProSe UE-to-Network Relay is determined, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. In response to the terminal supporting the control plane security mechanism for the ProSe UE-to-Network Relay and the network supporting the control plane security mechanism for the ProSe UE-to-Network Relay, it is determined to send a service authorization parameter and/or policy and parameter provisioning parameter and/or policy including the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism.

It should be noted that those skilled in the art can understand that the method provided in embodiments of the present disclosure can be executed alone or together with some methods in the embodiments of the present disclosure or some methods in the related arts.

As shown in FIG. 4, an embodiment of the present disclosure provides a wireless communication method for a Proximity Service (ProSe), which is performed by a first network function and includes:
in step 41, terminal capability information sent by a second network function is received, or, the terminal capability information sent by a terminal is received, and capability information includes at least one of: the terminal capability information indicating whether the terminal supports or does not support a control plane security mechanism for a ProSe UE-to-Network Relay, or network capability information indicating whether a network supports or does not support the control plane security mechanism for the ProSe UE-to-Network Relay.

In an embodiment, the terminal capability information sent by a second network function is received, and the terminal capability information indicates whether the terminal supports or does not support the control plane security mechanism for the ProSe UE-to-Network Relay. The capability information associated with the ProSe UE-to-Network Relay is determined, and based on the determination result of the capability information, it is determined whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay.

In an embodiment, the second network function is an Access and Mobility Management Function (AMF). Registration request information of the terminal received by the AMF includes the capability information.

In an embodiment, the terminal capability information sent by the terminal is received, and the terminal capability information indicates whether the terminal supports or does not support the control plane security mechanism for the ProSe UE-to-Network Relay. The capability information associated with the ProSe UE-to-Network Relay is determined, and based on the determination result of the capability information, it is determined whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay.

In an embodiment, during a UE policy association establishment procedure and/or UE triggered policy provisioning procedure, the terminal capability information sent by the terminal is received, and the terminal capability information indicates whether the terminal supports or does not support the control plane security mechanism for the ProSe UE-to-Network Relay. The capability information associated with the ProSe UE-to-Network Relay is determined, and based on the determination result of the capability information, it is determined whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. For example, a UE policy association establishment and/or UE triggered policy provisioning request carries the terminal capability information.

It should be noted that those skilled in the art can understand that the method provided in embodiments of the present disclosure can be executed alone or together with some methods in the embodiments of the present disclosure or some methods in the related arts.

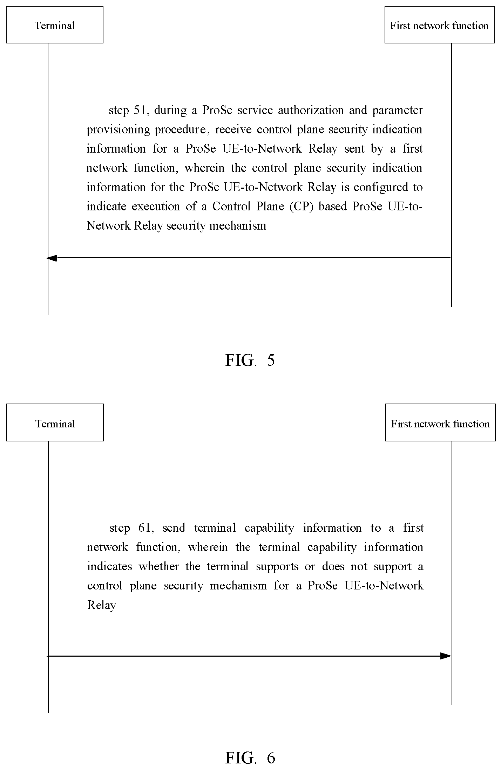

As shown in FIG. 5, an embodiment of the present disclosure provides a wireless communication method for a Proximity Service (ProSe), which is performed by a terminal and includes:
in step 51, control plane security indication information for a ProSe UE-to-Network Relay sent by a first network function is received during a ProSe service authorization procedure and parameter provisioning procedure; and
the control plane security indication information for the ProSe UE-to-Network Relay is configured to indicate execution of a Control Plane (CP) based ProSe UE-to-Network Relay security mechanism.

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of a New Radio (NR) terminal (e.g., an R17 NR terminal).

The access network device involved in the present disclosure may be a base station, and the base station may be various types of base stations, for example, a base station of the third generation mobile communication (3G) network, a base station of the fourth generation mobile communication (4G) network, a base station of the fifth generation mobile communication (5G) network, or other evolved base stations.

The network functions involved in the present disclosure may be various types of network functions, for example, a network function of the fifth generation mobile communication (5G) network or other evolved network functions. For example, the first network function is a PCF, and the second network function is an Access and Mobility Management Function (AMF).

In an embodiment, the first network function determines capability information associated with the ProSe UE-to-Network Relay, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. In response to the terminal supporting the control plane security mechanism for the ProSe UE-to-Network Relay and the network supporting the control plane security mechanism for the ProSe UE-to-Network Relay, it is determined to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism. The terminal receives the control plane security indication information for the ProSe UE-to-Network Relay sent by the first network function during the ProSe service authorization procedure and parameter provisioning procedure.

In an embodiment, the first network function determines capability information associated with the ProSe UE-to-Network Relay, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. In response to the terminal supporting the control plane security mechanism for the ProSe UE-to-Network Relay and the network supporting the control plane security mechanism for the ProSe UE-to-Network Relay, it is determined to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism. The terminal receives, during the ProSe service authorization procedure and parameter provisioning procedure, a service authorization parameter and/or policy and parameter provisioning parameter and/or policy sent by the first network function including the control plane security indication information for the ProSe UE-to-Network Relay.

In an embodiment, the terminal sends the terminal capability information to the first network function, and the terminal capability information indicates whether the terminal supports or does not support the control plane security mechanism for the ProSe UE-to-Network Relay. The first network function determines the capability information associated with the ProSe UE-to-Network Relay; and determines, based on the determination result of the capability information, whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay.

In an embodiment, the terminal capability information is sent to the first network function, and the terminal capability information indicates whether the terminal supports or does not support the control plane security mechanism for the ProSe UE-to-Network Relay. The first network function determines the capability information associated with the ProSe UE-to-Network Relay; and determines, based on the determination result of the capability information, whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. The terminal receives, during the ProSe service authorization procedure and parameter provisioning procedure, the control plane security indication information for the ProSe UE-to-Network Relay sent by the first network function.

In an embodiment, during a UE policy association establishment procedure and/or UE triggered policy provisioning procedure, the terminal capability information is sent to the first network function, and the terminal capability information indicates whether the terminal supports or does not support the control plane security mechanism for the ProSe UE-to-Network Relay. The first network function determines the capability information associated with the ProSe UE-to-Network Relay; and determines, based on the determination result of the capability information, whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. For example, a UE policy association establishment and/or UE triggered policy provisioning request carries the terminal capability information.

In an embodiment, registration request information is sent, the registration request information indicates the terminal capability information, and the terminal capability information indicates whether the terminal supports or does not support the control plane security mechanism for the ProSe UE-to-Network Relay. The control plane security indication information for the ProSe UE-to-Network Relay sent by the first network function is received during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism.

It should be noted that those skilled in the art can understand that the method provided in embodiments of the present disclosure can be executed alone or together with some methods in the embodiments of the present disclosure or some methods in the related arts.

As shown in FIG. 6, an embodiment of the present disclosure provides a wireless communication method for a Proximity Service (ProSe), which is performed by a terminal and includes:
in step 61, terminal capability information is sent to a first network function, and the terminal capability information indicates whether the terminal supports or does not support a control plane security mechanism for a ProSe UE-to-Network Relay.

In an embodiment, the terminal sends the terminal capability information to the first network function, and the terminal capability information indicates whether the terminal supports or does not support the control plane security mechanism for the ProSe UE-to-Network Relay. The first network function determines the capability information associated with the ProSe UE-to-Network Relay; and determines, based on the determination result of the capability information, whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay.

In an embodiment, the terminal capability information is sent to the first network function, and the terminal capability information indicates whether the terminal supports or does not support the control plane security mechanism for the ProSe UE-to-Network Relay. The first network function determines the capability information associated with the ProSe UE-to-Network Relay; and determines, based on the determination result of the capability information, whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. The terminal receives, during the ProSe service authorization procedure and parameter provisioning procedure, the control plane security indication information for the ProSe UE-to-Network Relay sent by the first network function.

In an embodiment, during a UE policy association establishment procedure and/or UE triggered policy provisioning procedure, the terminal capability information is sent to the first network function, and the terminal capability information indicates whether the terminal supports or does not support the control plane security mechanism for the ProSe UE-to-Network Relay. The first network function determines the capability information associated with the ProSe UE-to-Network Relay; and determines, based on the determination result of the capability information, whether to send the control plane security indication information for the ProSe UE-to-Network Relay to the terminal during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism, and the capability information includes at least one of: the terminal capability information indicating whether the terminal supports or does not support the control plane security mechanism for the ProSe UE-to-Network Relay, or the network capability information indicating whether the network supports or does not support the control plane security mechanism for the ProSe UE-to-Network Relay. For example, a UE policy association establishment and/or UE triggered policy provisioning request carries the terminal capability information.

It should be noted that those skilled in the art can understand that the method provided in embodiments of the present disclosure can be executed alone or together with some methods in the embodiments of the present disclosure or some methods in the related arts.

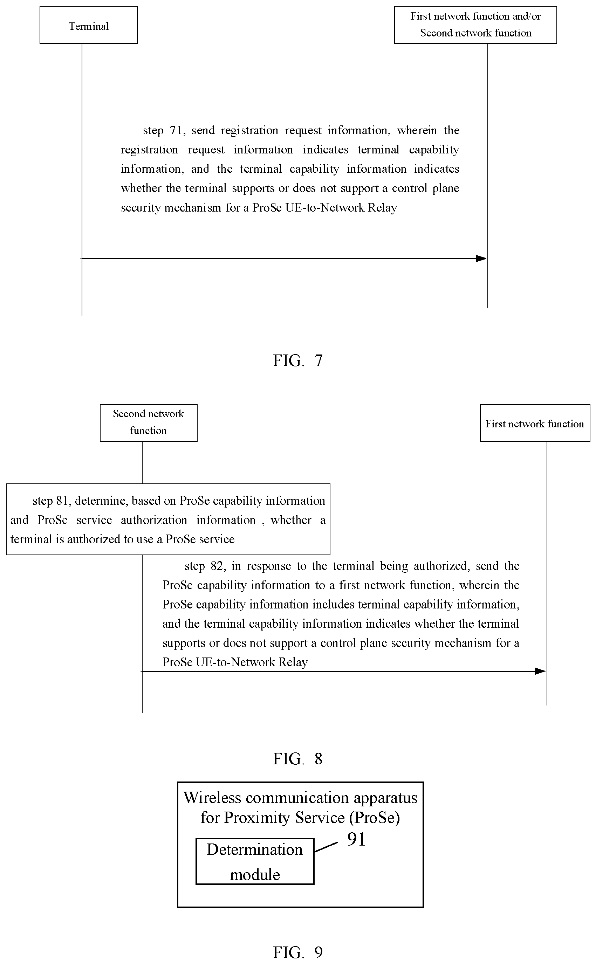

As shown in FIG. 7, an embodiment of the present disclosure provides a wireless communication method for a Proximity Service (ProSe), which is performed by a terminal and includes:
in step 71, registration request information is sent, the registration request information indicates terminal capability information, and the terminal capability information indicates whether the terminal supports or does not support a control plane security mechanism for a ProSe UE-to-Network Relay.

In an embodiment, the registration request information is sent, the registration request information indicates the terminal capability information, and the terminal capability information indicates whether the terminal supports or does not support the control plane security mechanism for the ProSe UE-to-Network Relay. The control plane security indication information for the ProSe UE-to-Network Relay sent by the first network function is received during the ProSe service authorization procedure and parameter provisioning procedure. The control plane security indication information for the ProSe UE-to-Network Relay is configured to indicate the execution of the Control Plane (CP) based ProSe UE-to-Network Relay security mechanism.

It should be noted that those skilled in the art can understand that the method provided in embodiments of the present disclosure can be executed alone or together with some methods in the embodiments of the present disclosure or some methods in the related arts.

As shown in FIG. 8, an embodiment of the present disclosure provides a wireless communication method for a Proximity Service (ProSe), which is performed by a second network function and includes:
in step 81, it is determined, based on ProSe capability information and ProSe service authorization information, whether a terminal is authorized to use a ProSe service; and
in step 82, in response to the terminal being authorized, the ProSe capability information is sent to a first network function, the ProSe capability information includes terminal capability information, and the terminal capability information indicates whether the terminal supports or does not support a control plane security mechanism for a ProSe UE-to-Network Relay.

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of a New Radio (NR) terminal (e.g., an R17 NR terminal).

The access network device involved in the present disclosure may be a base station, and the base station may be various types of base stations, for example, a base station of the third generation mobile communication (3G) network, a base station of the fourth generation mobile communication (4G) network, a base station of the fifth generation mobile communication (5G) network, or other evolved base stations.

The network functions involved in the present disclosure may be various types of network functions, for example, a network function of the fifth generation mobile communication (5G) network or other evolved network functions. For example, the first network function is a PCF, and the second network function is an Access and Mobility Management Function (AMF).

In an embodiment, the terminal sends registration request information, the registration request information indicates the terminal capability information, and the terminal capability information indicates whether the terminal supports or does not support the control plane security mechanism for the ProSe UE-to-Network Relay. The second network function determines, based on the ProSe capability information and the ProSe service authorization information, whether the terminal is authorized to use the ProSe service; and in response to the terminal being authorized, the second network function sends the ProSe capability information to the first network function. The ProSe capability information includes the terminal capability information, and the terminal capability information indicates whether the terminal supports or does not support the control plane security mechanism for the ProSe UE-to-Network Relay.

It should be noted that those skilled in the art can understand that the method provided in embodiments of the present disclosure can be executed alone or together with some methods in the embodiments of the present disclosure or some methods in the related arts.

As shown in FIG. 9, an embodiment of the present disclosure provides a wireless communication apparatus for a Proximity Service (ProSe), which includes:
a determination module 91, configured to determine capability information associated with a ProSe UE-to-Network Relay, and determine, based on a determination result of the capability information, whether to send control plane security indication information for the ProSe UE-to-Network Relay to a terminal during a ProSe service authorization procedure and parameter provisioning procedure;
the control plane security indication information for the ProSe UE-to-Network Relay is configured to indicate execution of a Control Plane (CP) based ProSe UE-to-Network Relay security mechanism, and the capability information includes at least one of:
terminal capability information, indicating whether a control plane security mechanism for the ProSe UE-to-Network Relay is supported or not supported by the terminal; or
network capability information, indicating whether the control plane security mechanism for the ProSe UE-to-Network Relay is supported or not supported by a network.

It should be noted that those skilled in the art can understand that the method provided in embodiments of the present disclosure can be executed alone or together with some methods in the embodiments of the present disclosure or some methods in the related arts.

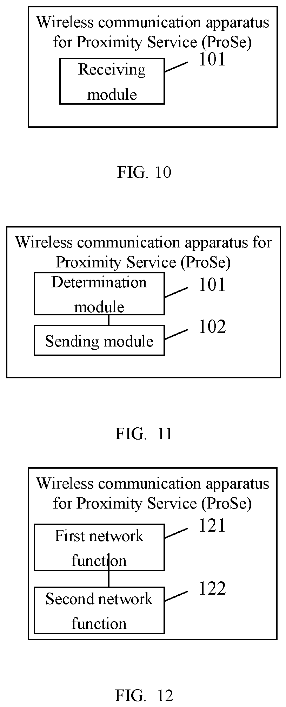

As shown in FIG. 10, an embodiment of the present disclosure provides a wireless communication apparatus for a Proximity Service (ProSe), including:
a receiving module 101, configured to receive, during a ProSe service authorization procedure and parameter provisioning procedure, control plane security indication information for a ProSe UE-to-Network Relay sent by a first network function, and the control plane security indication information for the ProSe UE-to-Network Relay is configured to indicate execution of a Control Plane (CP) based ProSe UE-to-Network Relay security mechanism.

It should be noted that those skilled in the art can understand that the method provided in embodiments of the present disclosure can be executed alone or together with some methods in the embodiments of the present disclosure or some methods in the related arts.

As shown in FIG. 11, an embodiment of the present disclosure provides a wireless communication apparatus for a Proximity Service (ProSe), including:
a determination module 111, configured to determine, based on ProSe capability information and ProSe service authorization information, whether a terminal is authorized to use a ProSe service; and
a sending module 112, configured to, in response to the terminal being authorized, send the ProSe capability information to a first network function, wherein the ProSe capability information includes terminal capability information, and the terminal capability information indicates whether a control plane security mechanism for a ProSe UE-to-Network Relay is supported or not supported by the terminal.

It should be noted that those skilled in the art can understand that the method provided in embodiments of the present disclosure can be executed alone or together with some methods in the embodiments of the present disclosure or some methods in the related arts.

As shown in FIG. 12, an embodiment of the present disclosure provides a wireless communication system for a Proximity Service (ProSe), which includes a first network function 121 and a second network function 122. The first network function is configured to execute the method described in any first network function of the present disclosure, and the second network function is configured to execute the method described in any second network function of the present disclosure.

It should be noted that those skilled in the art can understand that the method provided in embodiments of the present disclosure can be executed alone or together with some methods in the embodiments of the present disclosure or some methods in the related arts.

An embodiment of the present disclosure provides a communication device, the communication device including:
a processor; and
a memory configured to store executable instructions of the processor;
the processor is configured to implement the method in any embodiment of the present disclosure when running the executable instructions.

The processor may include various types of storage media, which are non-temporary computer storage media that can continue to memorize information stored thereon after the communication device loses power.

The processor may be connected to the memory via a bus or the like to read the executable program stored in the memory.

An embodiment of the present disclosure further provides a computer storage medium having a computer executable program stored thereon, which, when executed by a processor, implements the method in any embodiment of the present disclosure.

Regarding the apparatus in the above embodiments, the specific manner in which each module performs operations has been described in detail in the embodiments of the method, and will not be elaborated here.

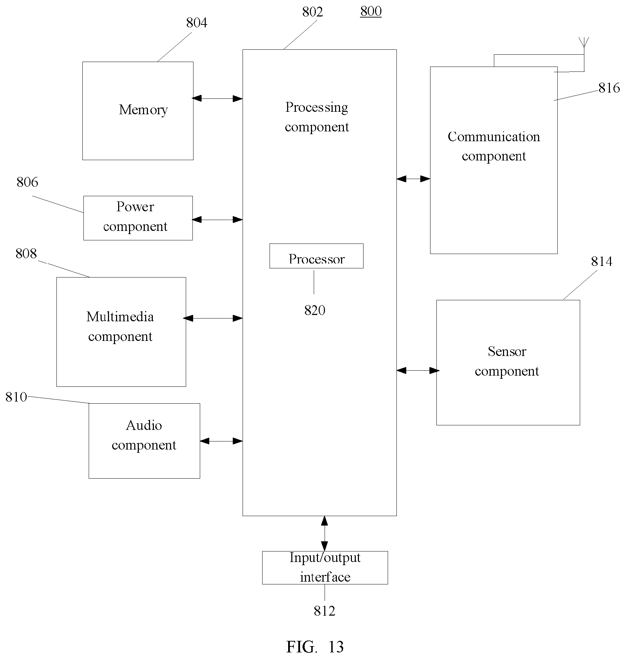

As shown in FIG. 13, an embodiment of the present disclosure provides a structure of a terminal.

Reference is made to a terminal 800 shown in FIG. 13. An embodiment of the present disclosure provides the terminal 800, which may be specifically a mobile phone, a computer, a digital broadcast terminal, a messaging device, a gaming console, a tablet device, a medical device, an exercise device, a personal digital assistant, etc.

Referring to FIG. 13, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to complete all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide state assessments of various aspects of the terminal 800. For instance, the sensor component 814 may detect an open/closed state of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 may access a wireless network based on a communication standard, such as Wi-Fi, 2G or 3G, or a combination thereof. In an embodiment, the communication component 816 receives a broadcast signal or broadcast associated information from an external broadcast management system via a broadcast channel. In an embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the terminal 800 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 804 including instructions, the above instructions may be executed by the processor 820 in the terminal 800 for completing the above-described methods. For example, the non-transitory computer-readable storage medium may be a ROM, a Random Access Memory (RAM), a CD-ROM, a magnetic tape, a floppy disc, an optical data storage device, and the like.

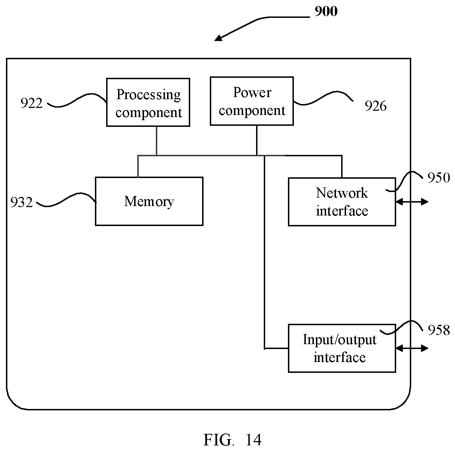

As shown in FIG. 14, embodiments of the present disclosure provide a structure of a base station. For example, a base station 900 may be provided as a network side device. Referring to FIG. 14, the base station 900 includes a processing component 922, which further includes one or more processors and a memory resource represented by a memory 932 for storing instructions executable by the processing component 922, such as an application program. The application program stored in the memory 932 may include one or more modules, each corresponding to a set of instructions. In addition, the processing component 922 is configured to execute the instructions to execute the aforementioned any method applied on the base station.

The base station 900 may further include: a power component 926 configured to perform power management of the base station 900, a wired or wireless network interface 950 configured to connect the base station 900 to the network, and an input/output (I/O) interface 958. The base station 900 may operate an operating system stored in the memory 932, such as Windows Server TM, Mac OS XTM, UnixTM, LinuxTM, FreeBSDTM, or the like.

Other implementations of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure. The specification and embodiments are considered as exemplary only, and a true scope and spirit of the present disclosure is indicated by the appending claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A wireless communication method for a Proximity Service (ProSe), performed by a first network function and comprising:
determining capability information associated with a ProSe UE-to-Network Relay; and
determining, based on a determination result of the capability information, whether to send control plane security indication information for the ProSe UE-to-Network Relay to a terminal during a ProSe service authorization procedure and parameter provisioning procedure;
wherein the control plane security indication information for the ProSe UE-to-Network Relay is configured to indicate execution of a Control Plane (CP) based ProSe UE-to-Network Relay security mechanism, and the capability information comprises at least one of:
terminal capability information, indicating whether a control plane security mechanism for the ProSe UE-to-Network Relay is supported or not supported by the terminal; or
network capability information, indicating whether the control plane security mechanism for the ProSe UE-to-Network Relay is supported or not supported by a network.

2. The method according to claim 1, wherein the first network function is a Policy Control Function (PCF).

3. The method according to claim 1, wherein determining, based on the determination result of the capability information, whether to send the control plane security indication information for the ProSe UE-to-Network Relay to the terminal during the ProSe service authorization procedure and parameter provisioning procedure comprises:
in response to the control plane security mechanism for the ProSe UE-to-Network Relay being supported by the terminal and the control plane security mechanism for the ProSe UE-to-Network Relay being supported by the network, determining to send the control plane security indication information for the ProSe UE-to-Network Relay to the terminal during the ProSe service authorization procedure and parameter provisioning procedure; or,
in response to the control plane security mechanism for the ProSe UE-to-Network Relay being not supported by the terminal and/or the control plane security mechanism for the ProSe UE-to-Network Relay being not supported by the network, determining not to send the control plane security indication information for the ProSe UE-to-Network Relay to the terminal during the ProSe service authorization procedure and parameter provisioning procedure.

4. The method according to claim 3, wherein sending the control plane security indication information for the ProSe UE-to-Network Relay to the terminal during the ProSe service authorization procedure and parameter provisioning procedure comprises:
sending a service authorization parameter and/or policy and parameter provisioning parameter and/or policy comprising the control plane security indication information for the ProSe UE-to-Network Relay to the terminal during the ProSe service authorization procedure and parameter provisioning procedure.

5. The method according to claim 1, wherein the method further comprises:
receiving the terminal capability information sent by a second network function.

6. The method according to claim 5, wherein the second network function is an Access and Mobility Management Function (AMF).

7. The method according to claim 6, wherein registration request information of the terminal received by the AMF comprises the terminal capability information.

8. The method according to claim 1, wherein the method further comprises:
receiving the terminal capability information sent by the terminal.

9. The method according to claim 8, wherein receiving the terminal capability information sent by the terminal comprises:
receiving, during a UE policy association establishment procedure and/or UE triggered policy provisioning procedure, the terminal capability information sent by the terminal.

10. The method according to claim 9, wherein the terminal capability information is carried by a UE policy association establishment and/or UE triggered policy provisioning request.

11. A wireless communication method for a Proximity Service (ProSe), performed by a terminal and comprising:
receiving, during a ProSe service authorization procedure and parameter provisioning procedure, control plane security indication information for a ProSe UE-to-Network Relay sent by a first network function;
wherein the control plane security indication information for the ProSe UE-to-Network Relay is configured to indicate execution of a Control Plane (CP) based ProSe UE-to-Network Relay security mechanism.

12. The method according to claim 11, wherein the first network function is a Policy Control Function (PCF).

13. The method according to claim 11, wherein receiving, during the ProSe service authorization procedure and parameter provisioning procedure, the control plane security indication information for the ProSe UE-to-Network Relay sent by the first network function comprises:
receiving, during the ProSe service authorization procedure and parameter provisioning procedure, a service authorization parameter and/or policy and parameter provisioning parameter and/or policy sent by the first network function comprising the control plane security indication information for the ProSe UE-to-Network Relay.

14. The method according to claim 11, wherein the method further comprises:
sending terminal capability information to the first network function, wherein the terminal capability information indicates whether a control plane security mechanism for the ProSe UE-to-Network Relay is supported or not supported by the terminal.

15. The method according to claim 14, wherein sending the terminal capability information to the first network function comprises:
sending the terminal capability information to the first network function during a UE policy association establishment procedure and/or UE triggered policy provisioning procedure.

16. The method according to claim 15, wherein the terminal capability information is carried by a UE policy association establishment and/or UE triggered policy provisioning request.

17. The method according to claim 11, wherein the method further comprises:
sending registration request information, wherein the registration request information indicates terminal capability information, and the terminal capability information indicates whether a control plane security mechanism for the ProSe UE-to-Network Relay is supported or not supported by the terminal.

18. A wireless communication method for a Proximity Service (ProSe), performed by a second network function and comprising:
determining, based on ProSe capability information and ProSe service authorization information, whether a terminal is authorized to use a ProSe service; and
in response to the terminal being authorized, sending the ProSe capability information to a first network function, wherein the ProSe capability information comprises terminal capability information, and the terminal capability information indicates whether a control plane security mechanism for a ProSe UE-to-Network Relay is supported or not supported by the terminal.

19. The method according to claim 18, wherein the second network function is an Access and Mobility Management Function (AMF).

20. A wireless communication apparatus for a Proximity Service (ProSe), comprising:
a determination module, configured to determine capability information associated with a ProSe UE-to-Network Relay, and determine, based on a determination result of the capability information, whether to send control plane security indication information for the ProSe UE-to-Network Relay to a terminal during a ProSe service authorization procedure and parameter provisioning procedure;
wherein the control plane security indication information for the ProSe UE-to-Network Relay is configured to indicate execution of a Control Plane (CP) based ProSe UE-to-Network Relay security mechanism, and the capability information comprises at least one of:
terminal capability information, indicating whether a control plane security mechanism for the ProSe UE-to-Network Relay is supported or not supported by the terminal; or
network capability information, indicating whether the control plane security mechanism for the ProSe UE-to-Network Relay is supported or not supported by a network.

21. A wireless communication apparatus for a Proximity Service (ProSe), comprising:
a receiving module, configured to receive, during a ProSe service authorization procedure and parameter provisioning procedure, control plane security indication information for a ProSe UE-to-Network Relay sent by a first network function;
wherein the control plane security indication information for the ProSe UE-to-Network Relay is configured to indicate execution of a Control Plane (CP) based ProSe UE-to-Network Relay security mechanism.

22. A wireless communication apparatus for a Proximity Service (ProSe), comprising:
a determination module, configured to determine, based on ProSe capability information and ProSe service authorization information, whether a terminal is authorized to use a ProSe service; and
a sending module, configured to, in response to the terminal being authorized, send the ProSe capability information to a first network function, wherein the ProSe capability information comprises terminal capability information, and the terminal capability information indicates whether a control plane security mechanism for a ProSe UE-to-Network Relay is supported or not supported by the terminal.

23. A wireless communication system for a Proximity Service (ProSe), comprising a first network function and a second network function, wherein the first network function is configured to execute the method according to any one of claims 1 to 11, and the second network function is configured to execute the method according to any one of claims 19 to 20.

24. A communication device, comprising:
an antenna;
a memory; and
a processor, connected to the antenna and the memory, respectively, and configured to, by executing computer executable instructions stored in the memory, control transmission and reception of the antenna, and implement the method according to any one of claims 1 to 10, 11 to 17 or 18 to 19.

25. A computer storage medium having computer executable instructions stored thereon, which, when executed by a processor, implement the method according to any one of claims 1 to 10, 11 to 17 or 18 to 19.
